# EUROPÄISCHE PATENTSCHRIFT

(11) **EP 0 463 329 B1**
(45) Veröffentlichungstag und Bekanntmachung des Hinweises auf die Patenterteilung: **10.11.1993**
(21) Anmeldenummer: 91107377.3
(22) Anmeldetag: 07.05.1991
(51) Int. Cl.: B60T 15/48, B60T 17/00

(54) **Druckluftanlage in einem Nutzfahrzeug**
Compressed air system for a commercial vehicle
Installation d'air comprimé pour véhicule utilitaire

(30) Priorität: 28.06.1990 DE 4020561
(43) Veröffentlichungstag der Anmeldung: 02.01.1992
(73) Patentinhaber: MAN Nutzfahrzeuge Aktiengesellschaft, 80976 München (DE)
(72) Erfinder: Albertshofer, Günter, Dipl.-Ing. (FH), W-8000 München 70 (DE)

(56) Entgegenhaltungen:
- DE-B- 1 208 207
- DE-B- 2 423 520
- ÖLHYDRAULIK UND PNEUMATIK, Band 28, Nr. 1, Januar 1984, sSeiten 40-43, Mainz, DE; A. REPPICH: "Lufttrocknung in Nutzfahrzeug-Bremsanlagen "
- SOVIET INVENTIONS ILLUSTRATED, Sektion Mechanik,Woche 8513, Zusammenfassung Nr. 079286 Q/18, 8 Mai 1985, Derwent Publications Ltd., London GB
- Zusammenfassung Nr. 079286 Q/18, 8. Mai 1985, Derwent Publications Ltd.,London, GB; & SU - A - 1081037 (POLT CARASSEMBLY) 23.03.1984

## Beschreibung

Die Erfindung bezieht sich auf eine Druckluftanlage in einem Nutzfahrzeug für die gleichzeitige und voneinander unabhängige Beaufschlagung einer Betriebsbremsanlage und einer Fahrerhausluftfederung mit auf unterschiedliche Abschaltdrücke abgesicherten Druckluftkreisen.

Es sind Druckluftanlagen in Nutzfahrzeugen bekannt, die neben ihrem Hauptzweck, nämlich der Beaufschlagung der Betriebsbremsanlage, die Entnahme eines gewissen Luftvolumens aus dem Anschluß des 4-kreis-Schutzventils erlauben, so daß sonstige Nebenverbraucher versorgt werden können. Dabei arbeitet der Anschluß für die Nebenverbraucher nur bis zum maximalen Druckniveau der Betriebsbremsanlage. Höhere Drücke können von diesem Anschluß nicht abgenommen werden.

Es ist eine weitere Druckluftanlage für Nutzfahrzeuge bekannt, siehe z.B. DE-A-1 208 207, bei der sowohl die Betriebsbremsanlage wie auch eine Fahrzeugluftfederung, die mit einem höheren Druckniveau als dem der Betriebsbremsanlage ausgelegt ist, gleichzeitig beaufschlagt werden. Hierbei wird der Druckregler auf das höhere Druckniveau eingestellt und der Druck für die Betriebsbremsanlage reduziert. Eine solche Anordnung kann nur für solche Fahrzeugluftfederungen eingesetzt werden, bei der das benötigte Luftvolumen im Bereich des Luftvolumens der Betriebsbremsanlage liegt. Bei der Fahrerhausluftfederung ist aber im allgemeinen das benötigte Volumen um einen Faktor 10 geringer als das der Betriebsbremsanlage, wodurch ein Luftverlust durch Bremsung nicht von der unter höherem Druck stehenden Luftfederanlage ausgeglichen werden kann und somit sofort zum Ansprechen des Druckreglers führt. Dies würde eine zu hohe Schalthäufigkeit des Druckreglers mit sich bringen und zu dessen frühzeitigem Ausfall führen.

Der Erfindung liegt die Aufgabe zugrunde, eine einfache Druckluftanlage mit hoher Lebensdauer für verschiedene Verbraucher mit unterschiedlichem Luftbedarf und unterschiedlichem Druckniveau zu schaffen.

Dies wird erfindungsgemäß dadurch erreicht, daß zur Trennung und gegenseitiger Absicherung von zwei parallelen Druckluftkreisen unterschiedlichen Druckniveaus ein indirekt gesteuertes 3/3-Wege-Ventil vorgesehen ist, das, von einem Luftkompressor mit Luft beaufschlagt, mit einem Ausgang auf einen Druckregler und mit dem anderen Ausgang auf einen anderen Druckregler geschaltet ist, wobei der eine Druckregler die Luftspeicher für die Betriebsbremsanlage und der andere Druckregler den Luftspeicher für die Luftfederanlage absichern. Solcherart kann für die Realisierung einer luftgefederten Fahrerhauslagerung ein unter höherem Druck stehender Druckluftkreis parallel zur Betriebsbremsanlage realisiert werden. Durch die Verwendung von zwei Druckreglern, von denen jeder auf den jeweiligen Betriebsdruck der von ihm versorgten Anlage eingestellt ist, kann die Schalthäufigkeit dem jeweiligen Luftverbrauch, getrennt in der Betriebsbremsanlage als auch der Fahrerhausluftfederanlage, angepaßt werden. Eine gegenseitige Beeinflussung findet nicht statt. Durch die erfindungsgemäße Anordnung wird eine rückkopplungsfreie Parallelanordnung von zwei Druckluftkreisen, die, auch unter verschiedenen Druckniveaus arbeiten können, erreicht. Solcherart können auch die durch große Volumenunterschiede gekennzeichnete Betriebsbremsanlage und Luftfederanlage von einem einzigen Kompressor aus beaufschlagt werden.

Die Erfindung ist in einem Ausführungsbeispiel dargestellt und beschrieben.

Es zeigt:

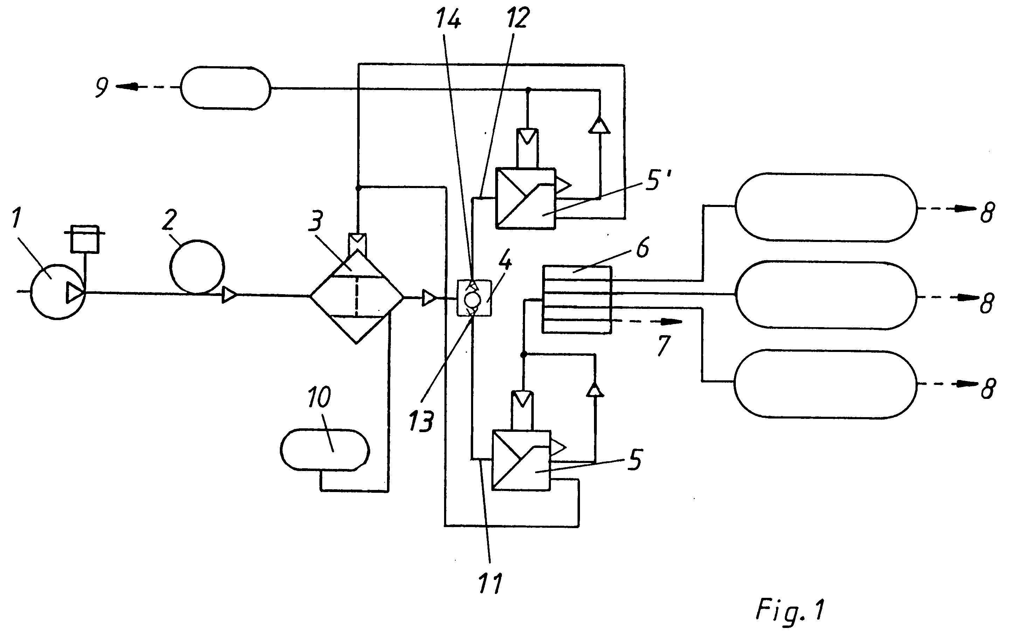

- Fig. 1: das Schaltschema einer Druckluftanlage in einem Nutzfahrzeug.

Ein Druckluftkompressor 1 ist auf ein indirekt gesteuertes 3/3-Wege-Ventil 4 geschaltet. Zwischen dem Kompressor 1 und dem Wegeventil 4 sind ein Kühlaggregat 2 und ein Lufttrockner 3 angeordnet. Am Ausgang 13 des indirekt gesteuerten 3/3-Wegeventils 4 schließt sich ein Druckluftkreis 11 für die Beaufschlagung der Betriebsbremsanlage an. Von Ausgang 13 aus wird ein Druckregler 5 beaufschlagt, der auf ein 4-kreis-Schutzventil 6 geschaltet ist, das einerseits für die Befüllung der der Betriebsbremsanlage zugeordneten Speicher 8 und andererseits für die Befüllung eines Speichers 7 für Nebenverbraucher vorgesehen ist. Am Ausgang 14 des indirekt gesteuerten 3/3-Wegeventils 4 liegt der Druckluftkreis 12 an, über dessen Druckluftregler 5' der Speicher 9 für die Luftfederanlage befüllt wird. Dem Lufttrockner 3, der die feuchte Luft während des Durchströmens trocknet, ist ein Speicher 10 für die Regenerierung des Lufttrockners zugeordnet, wenn beide Druckregler abgeblasen haben (Leerlaufstellung).

Die Trennung sowie die wechselseitige oder gleichzeitige Bevorratung der Druckluftkreise 11, 12 übernimmt ein indirekt gesteuertes 3/3-Wege-Ventil 4, das auf die Schaltzustände der Druckregler 5, 5' nach dem "Select-High"-Prinzip reagiert, d.h., reagiert ein Druckregler auf einen Luftverlust in der von ihm abgesicherten Vorratsanlage mit einem plötzlichen Schließen des Abblaseventils, so bewirkt die Druckerhöhung in der entsprechenden Anschlußleitung des indirekt gesteuerten 3/3-Wege-Ventil 4 ein Verschließen des Abblaseventils des anderen Druckreglers und damit eine ausschließliche Befüllung des abgesunkenen Druckluftkreises.

Sinken beide Druckluftkreise unter die Einschaltschwelle der jeweiligen Druckregler, so wird der unter dem höchsten Druck stehende Anschluß am indirekt gesteuerten 3/3-Wege-Ventil 4 zuerst befüllt.

Ist in beiden Druckluftkreisen der jeweilige Abschaltdruck des Druckreglers erreicht, so wird drucklos durch das indirekt gesteuerte 3/3-Wege-Ventil 4, bei den Ablaßventilen der Druckregler 5, 5' ins Freie gefördert.

Die Steuerleitungen der Druckregler 5, 5' werden dabei mit Druck beaufschlagt und bewirken eine Regeneration des drucklos durchströmten Trockners 3. Die Steuerleitungen sind dabei in "und-Schaltung" verknüpft, so daß erst bei Druckbeaufschlagung beider Leitungen eine Regeneration stattfinden kann. Die Druckregler 5, 5' können durch diese Anordnung nach dem Lufttrockner 3 angeordnet werden und werden somit mit getrockneter Luft durchströmt.

### Bezugszeichenliste

- 1: Luftkompressor
- 2: Kühlaggregat
- 3: Lufttrockner
- 4: indirekt gesteuertes 3/3-Wege-Ventil
- 5, 5': Druckregler
- 6: 4-kreis-Schutzventil
- 7: Speicher für Nebenverbraucher
- 8: Speicher für Betriebsbremsanlage
- 9: Speicher für Luftfederanlage
- 10: Speicher für die Regenerierung des Luftrockners
- 11: Druckluftkreis für Betriebsbremsanlage
- 12: Druckluftkreis für Luftfederanlage
- 13: Ausgang von 4
- 14: Ausgang von 4

## Patentansprüche

1. Druckluftanlage in einem Nutzfahrzeug für die gleichzeitige und voneinander unabhängige Beaufschlagung einer Betriebsbremsanlage und einer Fahrerhausluftfederung mit auf unterschiedliche Abschaltdrücke abgesicherten Druckluftkreisen, dadurch gekennzeichnet, daß zur Trennung und gegenseitigen Absicherung von zwei parallelen Druckluftkreisen (11, 12) unterschiedlichen Druckniveaus ein indirekt gesteuertes 3/3-Wege-Ventil (4) vorgesehen ist, das, von einem Luftkompressor (1) mit Druckluft beaufschlagt, mit einem Ausgang (13) auf einen ersten Druckregler (5) und mit dem anderen Ausgang (14) auf einen zweiten Druckregler (5') geschaltet ist, wobei der erste Druckregler (5) die Luftspeicher (8) für die Betriebsbremsanlage und der zweite Druckregler (5') den Luftspeicher (9) für die Luftfederanlage absichert.

2. Druckluftanlage nach Anspruch 1, dadurch gekennzeichnet, daß vor den Luftspeichern (8) ein 4-Kreis-Schutzventil (6) zur Absicherung der verschiedenen Bremskreise (8) sowie diverser Nebenverbraucher (7) angeordnet ist.

3. Druckluftanlage nach Anspruch 1 oder 2, dadurch gekennzeichnet, daß zwischen Luftkompressor (1) und 3/3-Wege-Ventil (4) ein Kühlaggregat (2) und ein Lufttrockner (3) angeordnet sind.

4. Druckluftanlage nach den Ansprüchen 1 bis 3, dadurch gekennzeichnet, daß dem Lufttrockner (3) ein Speicher (10) zugeordnet ist.

## Claims

1. A compressed-air system in a commercial vehicle for the simultaneous and independent supply of a service-brake system and an air spring suspension for a driver's cab, with compressed-air circuits protected at different cut-off pressures, characterised in that, for the separation and mutual protection of two parallel compressed-air circuits (11, 12) having different pressure levels, there is provided an indirectly controlled 3/3-way valve (4) which, when supplied with compressed air from an air compressor (1), is connected to a first pressure regulator (5) at one outlet (13) and to a second pressure regulator (5') at the other outlet (14), the first pressure regulator (5) protecting the air reservoirs (8) for the service-brake system and the second pressure regulator (5') protecting the air reservoir (9) for the air-spring system.

2. A compressed-air system according to Claim 1, characterised in that a 4-circuit safety valve (6) is arranged upstream of the air reservoirs (8) in order to protect the different brake circuits (8) and various secondary consuming devices (7).

3. A compressed-air system according to Claim 1 or 2, characterised in that a cooling unit (2) and an air dryer (3) are arranged between the air compressor (1) and the 3/3-way valve (4).

4. A compressed-air system according to Claims 1 to 3, characterised in that the air dryer (3) is provided with a reservoir (10).

## Revendications

1. Installation d'air sous pression dans un véhicule utilitaire pour l'alimentation simultanée indépendante d'une installation de frein de fonctionnement et d'une suspension pneumatique de la cabine comprenant des circuits d'air sous pressions protégés par des pressions de commutation différentes, caractérisée en ce que pour la séparation et la protection réciproque de deux circuits d'air sous pression parallèles (11, 12) à niveau de pression différent, on a un distributeur (4) à tiroir à 3/3 voies à commande indirecte qui alimente en air sous pression un compresseur d'air (1), un premier régulateur de pression (5) avec une sortie (13), un régulateur de pression (5') relié à l'autre sortie (14) où le premier régulateur de pression (5) protège le réservoir d'air (8) pour l'installation de frein et le second régulateur de pression (5') protège le réservoir d'air (9) pour l'installation de suspension pneumatique.

2. Installation d'air sous pression selon la revendication 1, caractérisée en ce qu'une soupape de protection à quatre voies (6) destinée à protéger les différents circuits de freinage (8) ainsi que les divers utilisateurs auxiliaires est située avant le réservoir d'air (8).

3. Installation selon la revendication 1 ou 2, caractérisée en ce qu'un ensemble frigorifique (2) et un sécheur d'air (3) sont situés entre le compresseur à air (1) et le distributeur (4) à tiroir à 3/3 voies.

4. Installation selon l'une des revendications 1 à 3, caractérisée en ce qu'un réservoir (10) est associé au sécheur d'air (3).
